**Europäisches Patentamt**

**European Patent Office**

**Office européen des brevets**

(11) Veröffentlichungsnummer: **0 233 857 B1**

(12) # EUROPÄISCHE PATENTSCHRIFT

(45) Veröffentlichungstag der Patentschrift:
06.03.91 Patentblatt 91/10

(51) Int. Cl.$^5$: **A61C 11/00**

(21) Anmeldenummer: **87890003.4**

(22) Anmeldetag: **13.01.87**

(54) **Artikulator zur Simulation von Unterkieferbewegungen.**

(30) Priorität: **10.02.86 AT 312/86**

(43) Veröffentlichungstag der Anmeldung:
**26.08.87 Patentblatt 87/35**

(45) Bekanntmachung des Hinweises auf die Patenterteilung:
**06.03.91 Patentblatt 91/10**

(84) Benannte Vertragsstaaten:
**BE CH DE FR GB IT LI LU NL SE**

(56) Entgegenhaltungen:
**DE-A- 1 791 187**
**DE-A- 2 443 235**
**DE-B- 2 922 153**
**US-A- 2 816 360**
**US-A- 2 909 837**

(73) Patentinhaber: **Lisec, Bernhard**
**Kupferzeile 25**
**A-4810 Gmunden (AT)**

(72) Erfinder: **Lisec, Bernhard**
**Kupferzeile 25**
**A-4810 Gmunden (AT)**

(74) Vertreter: **Hübscher, Gerhard, Dipl.-Ing. et al**
**Patentanwälte Dipl.-Ing. Gerhard Hübscher**
**Dipl.-Ing. Helmut Hübscher Dipl.-Ing. Heiner**
**Hübscher Spittelwiese 7**
**A-4020 Linz (AT)**

EP 0 233 857 B1

**Beschreibung**

Die Erfindung betrifft einen Artikulator zur Simulation von Unterkieferbewegungen nach dem Oberbegriff des Patentanspruches.

Artikulatoren sind Vorrichtungen zur zahnärztlichen Verwendung, in denen die Modelle bezahnter oder unbezahnter Kiefer so befestigt werden, daß ihre Stellung zueinander ihrer Stellung im Munde des Patienten entspricht. Die einfachste Ausführung ist ein einfaches Scharnier oder eine mechanische Verschlüsselung ; eine genaue Wiedergabe erfolgt hiebei nur bei geschlossener Zahnreihe, der Schlußbißstellung. Sollen die Öffnungs-, Vorbiß- und Seitbißbewegungen ohne größere Genauigkeit nachgeahmt werden, kommen sogenannte halbjustierbare Artikulatoren zur Anwendung. Ihre Gelenke bestehen aus Kugelzapfen oder Stiften, die auf radial zur Artikulatorachse einstellbaren Flächen oder in Schlitzen gleiten, um die Vorwärts- und Abwärtsneigung der Kiefergelenksbahn darzustellen. Der Abstand der Gelenke entspricht anatomischen Mittelwerten.

Wie die US-A-2 909 837 zeigt, gibt es dabei auch schon Gelenke mit Achsstummeln, die durch ihre Profilierung eine seitliche Führung des Oberteils gegenüber dem Unterteil bewirken.

Um die Modelle zur Artikulatorachse kiefergelenksbezüglich richtig zu montieren, kommen Gesichtsbögen in Anwendung. Die Gelenksbahnneigung wird nach Mittelwerten oder mit Hilfe von im Munde genommenen Registrierbissen eingestellt. Registrierbisse sind gleichzeitig im Munde genommene Eindrücke der oberen und unteren bezahnten oder unbezahnten Kiefer in geeignetem Abformmaterial, die die rechte, linke und vorgeschobene Stellung des Unterkiefers zum Oberkiefer festhalten. Diese Registrierbisse ermöglichen das Einstellen der Artikulatorgelenksbahnen, wenn die Modelle in die Eindrücke der Registrierbisse bei geöffneter Scharnierachse des Artikulators eingesetzt werden. Die Modelle müssen vorher genau achsenbezüglich im Artikulator montiert sein. Bekannte Fabrikate dieser Art sind z.B. Dentatus oder Whip-Mix und SAM, der Firmen Dentatus, Whip-Mix Corporation und SAM.

Diese Artikulatoren sind anwendbar, wenn bei ausreichendem Schneidezahnüberbiß und bei hergestellter Schneidezahnführung, die Backenzähne bei den Seitwärtsbewegungen des Unterkiefers sich rasch trennen. Ist eine Schneidezahnführung nicht darstellbar, würden bei dieser ungenauen Simulation der kaufunktionellen Bewegungen Höcker der Backenzähne zum Zeitpunkt der größten Kaukraftentfaltung vorzeitig aufeinandertreffen. Ein so hergestellter Zahnersatz wäre instabil, würde unter Umständen früher zerstört und könnte krankhafte Veränderungen am Kauorgan auslösen.

Um ein vorzeitiges Aufeinandertreffen von Backenzahnhöckern zu vermeiden und ein gleichmäßiges Ineinandergleiten aller Zähne beim Kauen zu erreichen, wurde von Stuart ein Gerät, Pantograph genannt, geschaffen. Mit diesem können die Unterkieferbewegungen auf 6 Schreibplatten am Patienten aufgezeichnet und auf volleinstellbare Artikulatoren übertragen werden. Bei solchen volleinstellbaren Artikulatoren sind die Kiefergelenksabstände individuell einstellbar und sie können mit einer Zentrikverriegelung ausgestattet sein, die bei Bedarf die Artikulatorachse für eine reine Scharnierbewegung aus der Schlußbißstellung heraus festlegt. Diese Artikulatoren weisen, wie die DE-B 29 22 153 und die DE-A 24 43 235 zeigen, Kugelgelenke zur Gelenksverbindung von Oberund Unterteil auf, bei denen die Gelenksköpfe entlang von die Bewegungsbahnen bestimmenden Steuerflächen gleiten. Die Steuerflächen bilden dabei den Kaubahnen angepaßte Profile, so daß es zu recht komplizierten Steuerflächen kommt, die schwierig herzustellen sind und sich auch kaum individuell anpassen lassen, wenn nicht der Aufwand spezieller Anfertigungen und des Austausches der Steuerflächen in Kauf genommen wird.

Es ist ein bekannter Mangel an diesen Geräten, daß der Techniker im Areal der Gelenksflächen beim Herstellen eines Zahnersatzes eine Unzahl an Bahnen aufsuchen kann, diese jedoch nicht mit den bevorzugten Bewegungsbahnen des Patienten übereinstimmen müssen. Wie die Aufzeichnungen von Gibbs mit dem Replikator-System am kauenden Patienten zeigen, werden bestimmte Bahnlinien bevorzugt und ihr zeitlicher Ablauf ist sehr charakteristisch. Die Schwierigkeit besteht darin, daß bei einer kaufunktionellen Seitwärtsbewegung des Unterkiefers, während der eine Gelenkskopf in der Gelenksbahn nach vorne abwärts gleitet, der zweite Gelenkskopf bei den meisten Patienten sich nicht nur um seine Achse dreht, sondern durch eine räumliche Seitversetzung des gesamten Unterkiefers eine Bewegung nach außen, bei den einzelnen Menschen sehr verschieden, bis zu 3 mm ausführt und sich auch noch in etwa gleichem Ausmaß rückwärts aufwärts oder rückwärts abwärts bewegen kann. Diese Bewegung erfolgt viel rascher und ist beendet, ehe der Gelenkskopf der gegenüberliegenden Seite das Ende seiner Bewegung nach etwa 10 mm erreicht hat.

Die genaue Betrachtung zeigt, daß beide Gelenksköpfe in diesem Teil der Bewegung annähernd einem Kreisbogen folgen, dessen imaginärer Mittelpunkt hinter und zwischen den Gelenken liegt, und seine Entfernung vom sich drehenden Gelenkskopf abhängig ist, vom Ausmaß seiner Seitwärts- und Rückwärtsbewegung und der Geschwindigkeitsrelation beider Gelenksköpfe auf ihren Bahnen. Demnach beschreibt jeder Punkt des Unterkiefers bei einer Seitwärtsbewegung eine bestimmte Kurve zum Oberkiefer, die erst in einen Kreisbogen übergeht, sobald der rotierende Gelenkskopf seinen seitlichsten und hintersten Anschlag im Gelenk der Arbeitsseite erreicht hat. Dieser Kreisbogen hat seinen Mittelpunkt im Gelenk.

Anmerkung :

Die beschriebenen Bewegungsabläufe laufen beim Kauen in umgekehrter Reihenfolge ab. Sie sind zur besseren Verständlichkeit in der Reihenfolge beschrieben, in der sie im Artikulator aus praktischen Gründen vollzogen werden. Wegen der leichteren Handhabung wird auch der Oberkieferteil des Artikulators gegen den Unterkiefer bewegt.

Es ist Aufgabe der Erfindung, einen Artikulator der eingangs geschilderten Art zu schaffen, der verhältnismäßig einfach aufgebaut ist, sich individuell mit großer Wiedergabegenauigkeit anpassen und einstellen läßt und dessen Steuerungseinrichtungen das Einhalten von weitgehend den Kaubewegungen des natürlichen Kiefers entsprechenden Bewegungsbahnen erlauben.

Die Erfindung löst diese Aufgabe gemäß dem Kennzeichen des Patentanspruches. Neu und vorteilhaft ist dabei im wesentlichen, daß durch diese Merkmale für jede aus der Schlußbißstellung herausführende Hauptbewegungsrichtung eine einwandfreie Kaubahn simulierbar ist und dazu keine genaue Übereinstimmung mehr zwischen Patientenunterkiefer und Artikulator hinsichtlich Scharnierachse und Gelenksabstand notwendig ist.

In der Zeichnung ist der Erfindungsgegenstand beispielsweise veranschaulicht, und zwar zeigen

Fig. 1 einen erfindungsgemäßen Artikulator in Seitenansicht,

Fig. 2 das Artikulatorgelenk in teilgeschnittener Ansicht von der Mitte des Artikulators aus,

Fig. 3 Teile der Steuerungseinrichtung des Artikulators in Seitenansicht,

Fig. 4 den Artikulator in Rückansicht,

Fig. 5 einen Teil der Gelenksverbindung ebenfalls in Rückansicht,

Fig. 6 und 7 das Artikulatorgelenk im Horizontalschnitt durch die Artikulatorachse A-B in Zentrierstellung bzw. in einer kaufunktionellen Seitenschwenkstellung und

Fig. 8 und 8a ein Schema der Wirkungsweise des Artikulators.

Der dargestellte Artikulator besteht aus einem Unterteil 1 und einem Oberteil 2, wobei Montageplatten 3 des Ober und Unterteils 1, 2 Modelle des Ober- und Unterkiefers 7, 8 aufnehmen. Der Oberteil 2 ist im Bereich eines hinteren Querträgers 4 an einem hochragenden hinteren Stützrahmen R des Unterteils 1 angelenkt, wobei die Gelenksverbindung jeweils ineinandergreifende Kegeltrichter 9 und Zentrierkegel 10 aufweist. Die Zentrierkegel 10 sind an seitlichen Schwingen 5 des Unterteils 1 angeordnet, die gegen die Kraft von durch Einstellschrauben 11 vorspannbaren Federn 12 ausschwenkbar gelagert sind. Die Kegeltrichter 9 öffnen sich auswärts und sitzen beiderends am Querträger 4 des Oberteils 2. Die Gelenksverbindung bestimmt in Zentrierstellung die zu den Kegeln 10 und Trichtern 9 koaxiale Artikulatorachse AB, wobei ein Stützstift 24 die Grundstellung des Oberteils vorgibt.

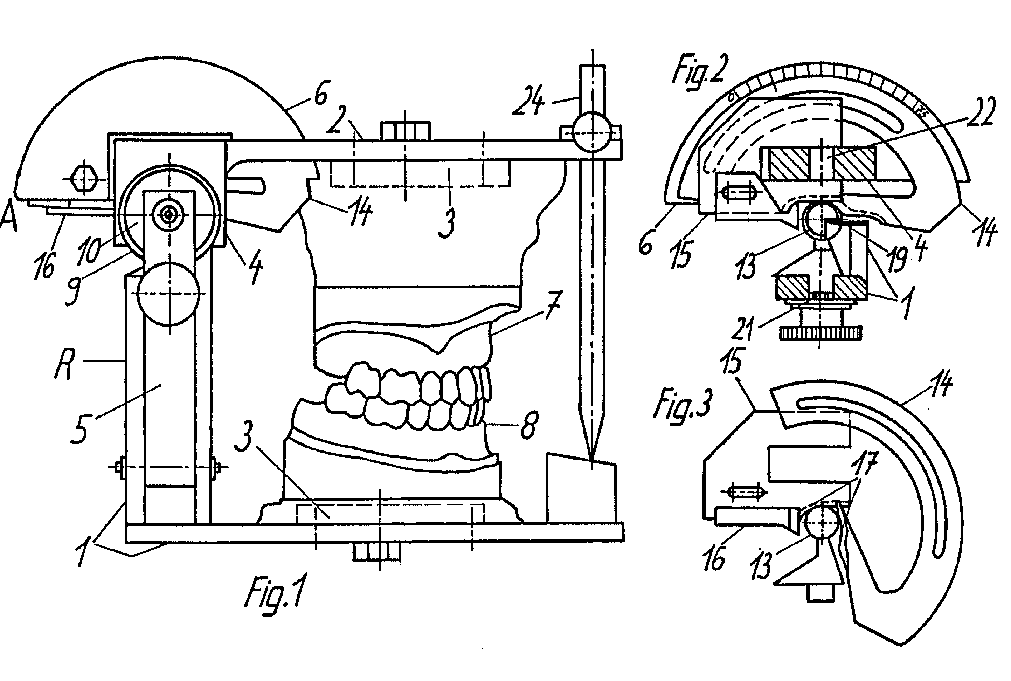

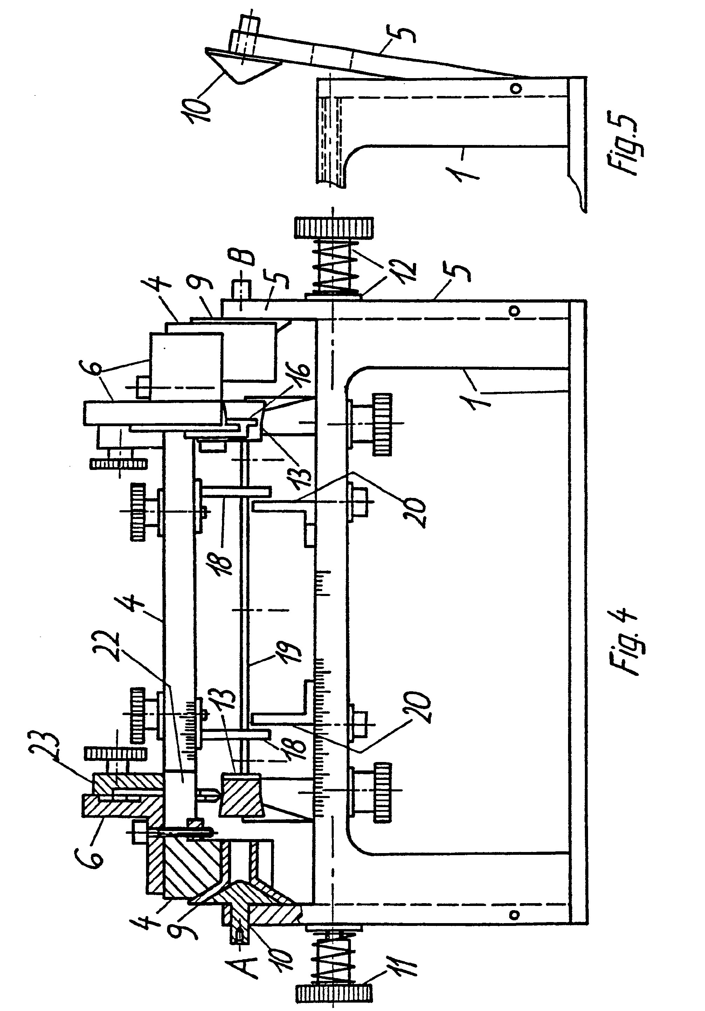

Zum Einstellen und Steuern der Bewegungsbahnen des Oberteils 2 gegenüber dem Unterteil 1 gibt es eine Steuerungseinrichtung, die eine mit dem Artikulatorunterteil 1 fest verbundene, eine in gleicher Höhe mit der Artikulatorachse AB verlaufende Steuerkante bildende Steuerleiste 19 umfaßt (Fig. 2 und 4). Die Steuerleiste 19 wirkt mit Zapfen 18 zusammen, die in einem Schlitz 22 des Oberteils 2 seitenverschiebbar und durch Schrauben feststellbar angeordnet sind. Die Zapfen 18 sind vertikal nach unten auf die Artikulatorachse AB ausgerichtet und die Steuerkante der Steuerleiste 19 liegt um den Zapfenradius vor der Artikulatorachse AB. Zwei Anschläge 20 sind in einem Querschlitz 21 des Artikulatorunterteils 1 ebenfalls seitenverschiebbar angeordnet und bilden eine um eine zapfenparallele Achse schwenkverstellbare Anschlagfläche. Weiters gibt es zwei Gelenksbahnträger 6 zur Aufnahme von je drei einzeln verstellbaren Gelenksbahnsegmenten 14, 15 16, wobei die Gelenksbahnträger 6 am Querträger 4 so befestigt sind, daß ihr gegenseitiger Abstand gegebenenfalls verändert und an den Kiefergelenksabstand eines Patienten angepaßt werden kann. Die Gelenksbahnsegmente wirken mit Gelenksköpfen 13 zusammen, die im Querschlitz 21 des Unterteils 1 schiebeverstellbar angeordnet und als zur Artikulatorachse AB koaxiale Walzen ausgebildet sind.

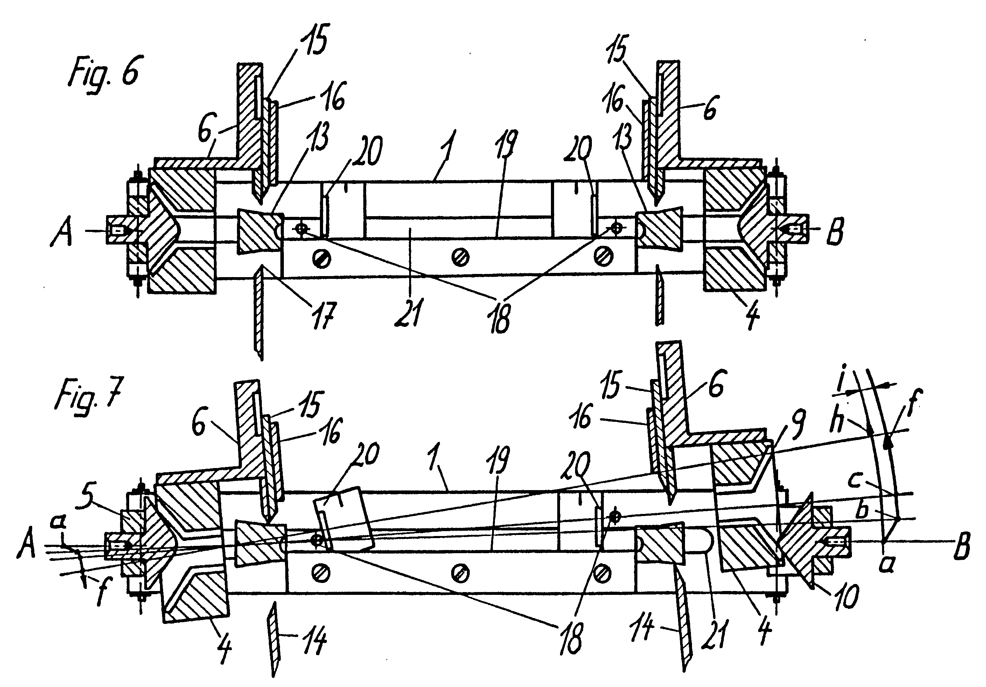

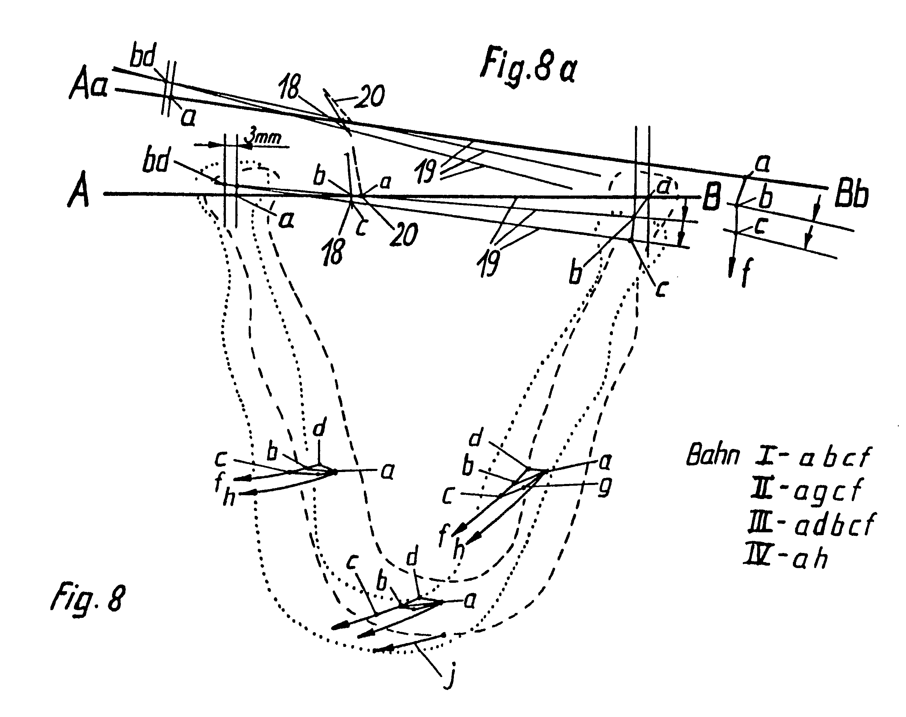

Wie in Fig. 6, 8 und Fig. 8a angedeutet ist vor Beginn einer Kaubewegung die Artikulatorachse AB zentriert. Beide Kegel 10 (Fig. 4, 5) sind durch die Federn 12 (Fig.4), die durch die Einstellschraube 11 vorgespannt werden, über die beiden Schwingen 5 in die Kegeltrichter 9 gedrückt, welche Shwingen 5 in dieser Stellung in beidseitige Nuten des Unterteils 1 eingreifen.

Die eingezeichnete Achse A-B in Fig. 6, 7, 8 entspricht der imaginären Scharnierachse des Unterkiefers, die nach ihrer Festlegung am Patienten mit einem Gesichtsbogen nach der pantographischen oder anderen bekannten Methoden durch entsprechende Montage der Kiefermodelle im Artikulator mit der Scharnierachse des Artikulators A-B identisch ist. In Fig. 8 ist diese Stellung des Unterkiefers durch gestrichelten Umriß gezeichnet und entspricht der Schlußbißstellung, in der die Höcker der Zähne beider Kiefer eine maximale Verzahnung aufweisen. Die Punkte a in Fig. 8 bezeichnen eine Höckerspitze eines linken und rechten unteren Backenzahnes und einen Punkt an den unteren Schneidezähnen. Um das Artikulatorgelenk entsprechend den individuellen Kaubewegungen des Patienten einzustellen, ist wie folgt vorzugehen :

Die Schwingen 5 mit den Zentrierkegeln 10 werden nach Lösen der Schrauben 11 mit den Federn 12 seitlich aus dem Artikulatorunterteil 1 geschwenkt. Nun wird der Registrierbiß einer Unterkieferseitbewegung zwischen die Modelle eingebracht (in den Fig. 7, 8, 8a der der rechten Seitwärtsbewegung). Diese Positionen eines Unterkiefers ist in Fig. 8 im Umriß gepunktet gezeichnet. Die dadurch bewirkte Stellung des Artikulatoroberteils gegen den Unterteil ergibt eine Überschneidung der Achsen (Fig. 7, 8, 8a) ; auf diesen Schnittpunkt wird der dieser Gelenksseite zugehörige Zapfen 18 des Oberteils 4 so eingestellt, daß die Mantelfläche des Zapfens 18 die Kante der Steuerleiste 19 berührt. Ist der Zapfen 18 festgestellt, wird Anschlag 20 des Unterteils 1, wie aus Fig. 7 ersichtlich, in Kontakt mit Zapfen 18 fixiert. Im gleichen Einstellvorgang werden das rechte Gelenksbahnsegment 15, das der Steuerung der Rückwärtsbewegung der rechten Gelenkskopfwalze 13 dient, und das Gelenksbahnssegment 16, das diese Bewegung als Anschlag begrenzt, mit ihrer Steuerkante 17 in Kontakt mit dieser Gelenkskopfwalze gebracht und festgestellt. Um die bei einer nach rechts gerichteten Seitbewegung des Unterkiefers gleichzeitig nach vorne abwärts gerichtete Gleitbewegung des linken Gelenkskopfes wiederzugeben, ist auch im gleichem Einstellvorgang das Gelenksbahnsegment 14 der linken Artikulatorseite mit seiner Steuerkante auf die linke Gelenskopfwalze 13 einzustellen (Fig.7). Nach analogem Vorgehen für die nach links gerichtete registrierte Bewegung ist das Programmieren des Artikulatorgelenkes auf die registrierten Seitbewegungen abgeschlossen.

Um die kaufunktionelle Bewegung des Unterkiefers eines Patienten (in den Fig. nach der rechten Seite dargestellt) im Artikulator nach zuvollziehen, werden die Zentrierkegel 10 mit den Schwingen 5 in die Kegeltrichter 9 geklappt (Fig. 6) und durch die Einstellschraube 11 (Fig.4) der rechten Gelenksseite, der Arbeitsseite, die Druckfeder 12 stark vorgespannt. Die Feder 12 der gegenüberliegenden linken Seite erhält durch ihre Einstellschraube eine wesentlich geringere Vorspannung, die gerade noch ausreicht, den Oberkieferteil des Artikulators mittels der Schwinge 5 und des Zentrierkegels 10 in seiner zentrischen Stellung zu halten (Fig. 1, 4, 6). Wird zur Simulation der Kaubewegung nach rechts Druck auf den Artikulatoroberteil in Richtung der Pfeile (Fig. 7) ausgeübt, treibt der Kegel 10 der rechten Seite durch Verkanten und Abgleiten des Kegeltrichters 9 den Artikulatoroberteil gegen den Kegel der Gegenseite, der entsprechend der weniger vorgespannten Druckfeder 12 mit seiner Schwinge 5 seitlich ausweicht. Es entsteht bis zum Anschlag des Zapfens 18 an den Anschlag 20 und des Gelenkskopfes 13 am Segment 16 durch Entlanggleiten des Zapfens 18 an der Kante der Führungsleiste 19 (Fig. 7, 8, 8a) eine Bewegung, die für die in Fig. 7, 8, 8a eingezeichneten Punkte dem Weg von a nach b der Bahn I entspricht. Bei weitergeführter Bewegung entfernt sich der Zapfen 18 entlang der Gleitfläche des Anschlages 20 von der Steuerleiste 19, die Form der Bahn I von b über c nach f steuernd. Durch die axiale Verstellbarkeit von Anschlag 20 wird erfindungsgemäß, wie besonders aus dem Vergleich der Fig. 8 und 8a ersichtlich, erreicht, daß, sobald der sich drehende Gelenkskopf den Anschlag von 16 erreicht hat und Teil 20 axial auf das Registrat eingestellt wurde, bei einer weitergeführten Bewegung für jeden Punkt des Unterkiefers eine kreisbogenförmige Bahn projiziert wird (Fig. 8, 8a Bahn I ab b in Richtung f), deren Mittelpunkt immer identisch ist mit dem Rotationszentrum des Unterkiefers ab dem Erreichen der seitlichsten und hintersten Lage des sich drehenden Gelenkskopfes. Dies erfolgt, wenn die Kiefermodelle nicht achsenbezüglich im Artikulator montiert werden und der Gelenksabstand nicht mit dem des Patienten übereinstimmt.

Um eine ausreichende räumliche Seitbewegung des Unterkiefers zu erreichen, werden Zentrierkegel mit einem Durchmesser von 20 mm und einem Winkel bis 45° verwendet. Die Seitbewegung des Unterkiefers am Patienten beträgt selten mehr als 1 mm.

Durch die erfindungsgemäße Verwendung von Zentrierkegeln und Kegeltrichten in zahnärztlichen Artikulatoren wird eine sichere und sehr stabile Zentrikverriegelung erreicht. Ein großer Vorteil dieser Anordnung ist, daß durch die Spannung der Feder 12 der Artikulator selbstständig und genau nach einer simulierten Kaubewegung in die zentrische Scharnierachsstellung zurückkehrt. Es bedeutet eine große Zeit- und Arbeitseinsparung gegenüber den bekannten volleinstellbaren Artikulatoren, daß das Lösen und Feststellen der Zentrikverriegelung nach jeder simulierten Kaubewegung wegfällt.

Den neuartigen Aufbau der Teile des mechanischen Artikulatorgelenks, die der Simulierung der Kurven- und neigungswinkelrichtigen Bewegung entsprechend der der natürlichen Gelenksköpfe auf ihren Gleitflächen im Gelenk dienen, zeigen Fig. 2, 3, wobei das radial um die Artikulatorachse des Oberteils schwenkbare Bahnsegment 14 die Vorwärtsbewegungen des Unterkiefers mit seiner Steuerkarte 17, die eine Kurvenform entsprechend der Form des natürlichen Kiefergelenkes aufweist, steuert. Teil 14 wird in einer kreisbogenförmigen Nut des Gelenksbahnhalters 6 aufgenommen und in dieser nach dem Einstellen der entsprechenden Bahnneigung durch eine Schraube festgestellt. Das Bahnsegment 15 steuert die nach hinten führenden Bewegungen des Kiefergelenkskopfes 13 ; es ist mit einem Schlitz am Artikulatoroberteil 2 vor-und rückwärts verschieblich und wird gemeinsam mit dem als Anschlag für die maximale Rückwärtsbewegung dienenden Bahnsegment 16 mit einer Schraube am Gelenksbahnträger 6 festgestellt.

Aus Fig. 4 und 7 ist die erfindungsgemäße Form der Gelenksköpfe 13 zu erkennen. Sie bestehen aus einem annähernd zylindrischen gelenkswirksamen Teil, der mit einem Fuß und entsprechender Verschraubung im Schlitz 21 (Fig. 2, 6, und 7) des Artikulatorunterteils 1 seitenverschieblich und feststellbar so angebracht ist, daß ihr zentrischer Mantelbereich, der einen Radius von 4,5 mm hat, bei Scharnierbewegungen des Artikulators immer mit dem gleichen Punkt der Kante der Gelenksbahnsegmente 14, 15 (Fig. 2) in Kontakt bleibt. Der Abstand der Gelenskköpfe 13 ist, wie in volleinstellbaren Artikulatoren üblich, im Schlitz 21 des Artikulatorunterteilsl einstellbar. Neu im Sinn der hier beschriebenen Erfindung ist ein den natürlichen kaufunktionellen Bewegungen des Patienten angepaßtes, durch Radiusveränderung erzieltes Oberflächenprofil der Gelenkswalzen 13 (Fig. 4, 6 und 7), auf dem bei räumlichen Seitbewegungen des Unterkiefers entsprechend der Registrierung durch seitliches Gleiten der Bahnsegmente 14 und 15 mit deren Steuerkanten 17 der Artikulatoroberteil entsprechend gehoben oder gesenkt wird. Durch Einsetzen einer kleinen Anzahll von vorrälig gehaltenen Gelenksköpfen, deren Profil vom zentrischen Bereich steigend oder fallend geformt ist, durch die Möglichkeit ihrer Verwendung im rechten oder linken Artikulatorgelenk bzw. die Möglichkeit, sie auch um 180° gedreht in den Artikulatorunterteil einzusetzen, ist man imstande, auf einfache Weise eine große Zahl von Bahnkurven sehr genau darzustellen. Durch den neuartigen Aufbau der mechanischen Gelenksbahnen ist es möglich, die Bewegungen des Unterkiefers eines Patienten auch dann nachzuahmen, wenn die Modelle nicht genau achsen- und gelenksbezüglich im Artikulator montiert wurden.

Fig. 8 zeigt in graphischer Form, von oben gesehen, die Entstehung von kaufunktionellen Kurvenbahnen durch den Erfindungsgegenstand im Vergleich zu erzielten Kurvenbahnen mit bekannten Artikulatorgelenken. Aus den Bahnen I, II, III und IV ist der Unterschied des Weges der Punkte a bei einer rechten Seitbewegung des Unterkiefers auf ihrem Weg nach f ersichtlich.

Diese Position des Unterkiefers ist in der Zeichnung 8 und 8a nach dem Vorwärtsgleiten des linken Gelenkskopfes um 10 mm, einer räumlichen Seitwärtsbewegung des Unterkiefers um 3 mm und einer Rückwärtsbewegung des sich drehenden Gelenkskopfes um 3 mm punktiert gezeichnet. Bahn I entsteht bei Verwendung der als Erfindungsgegenstand beschriebenen Steuereinrichtung des Artikulatorgelenkes, wenn dieses so eingestellt ist, daß bei einem Vorgleiten des einen Gelenkskopfes um 5 mm die seitlichste und hinterste Position des rotierenden Gelenkskopfes bd erreicht ist.

Bahn II zeigt den Weg der Punkte a, wenn die durch die Steuereinrichtung erzwungene Endstellung des Rotationsgelenkes erst nach 10 mm Vorgleiten erreicht ist.

Bahn III entsteht in allen bis jetzt bekannten volleinstellbaren Artikulatoren durch sofortiges Aufsuchen der seitlichsten und hintersten Stellung mit dem Rotationsgelenkskopf, ehe mit dem Vorgleiten der anderen Seite begonnen wird.

Bahn IV entsteht, wenn die räumliche Seitbewegung des Unterkiefers nicht nachgeahmt wird.

Fig. 8a zeigt, daß es mit dem neuen Steuermechanismus nicht mehr notwendig ist, die Modelle genau achsenbezüglich im Artikulator zu montieren. Die Artikulatorachse, mit Aa-Bb bezeichnet, befindet sich in Fig. 8a in stark veränderter Position zur Scharnierachse des Unterkiefers in Fig. 8.

**Ansprüche**

1. Artikulator zur Simulation von Unterkieferbewegungen, mit einem ein Unterkiefermodell (8) aufnehmenden Unterteil (1) und einem ein Oberkiefermodell (7) aufnehmenden Oberteil (2), wobei der in Grundstellung etwa eine horizontale Ebene, die Artikulatorebene, bestimmende Oberteil (2) im Bereich eines hinteren Querträgers (4) an einem hochragenden hinteren Stützrahmen (R) des Unterteils (1) angelenkt ist und die gegenseitige, in Zentrierstellung eine horizontale Schwenkachse, die Artikulatorachse (AB), bestimmende Gelenksverbindung Steuerungseinrichtungen zum Einstellen und Steuern der Bewegungsbahnen des Oberteils (2) gegenüber dem Unterteil (1) aufweist, dadurch gekennzeichnet, daß die Gelenksverbindung aus zwei Paar jeweils ineinandergreifender, die Artikulatorachse (AB) vorgebender Zentrierkegeln (10) und Kegeltrichter (9) besteht, wobei sich die endseitig des Querträgers (4) am Oberteil (2) befestigten Kegeltrichter (9) auswärts öffnen und die diesen zugekehrten Zentrierkegel (10) an seitlichen Schwingen (5) des Unterteils (1) angeordnet sind, die gegen die Kraft in ihrer Vorspannung einstellbarer Federn (12) um eine Normalachse zur Artikulatorachse (AB) auswärts schwenkbar am Stützrahmen (R) lagern, und daß die Steuerungseinrichtungen einerseits zwei mit einer Steuerleiste (19) und zwei Anschlägen (20) zusammenwirkende Zapfen (18) und anderseits zwei jeweils mit drei Gelenksbahnsegmenten (14, 15 16) zusammenwirkende Gelenksköpfe (13) umfassen, wobei die zur Arikulatorebene normalen, auf die Artikulatorachse (AB) ausgerichteten Zapfen (18) in Richtung der Artikualtorachse (AB) schiebeverstellbar in einem Schlitz (22) des Oberteils (2) sitzen, die in Richtung der Artikulatorachse (AB) schiebeverstellbar in einem Schlitz (21) des Unterteils (1) sitzenden Anschläge (20) eine um eine zapfenparallele Achse drehverstellbare Anschlagfläche aufweisen und die Steuerleiste (19) eine um den Zapfenhalbmesser vor der Artikulatorachse (AB) liegende, nach hinten gerichtete artikulatorachsparallele Steuerkante bildet und wobei die Gelenksköpfe (13) aus zur Artikulatorachse (AB) koaxialen, in Achsrichtung schiebeverstellbar im Unterteil (1) gelagerten walzen bestehen und jeweils die drei Gelenksbahnsegmente (14 15, 16), die auf die Mantelfläche der Walzen (13) abgestimmte, in einer Normalebene zur Artikulatorachse (AB) verlaufende Steuerkurven (17) bilden, einzeln einstellbar in einem in Achsrichtung schiebeverstellbar am Oberteil (2) angeordneten Halter (6) eingesetzt sind.

## Claims

1. An articulator for simulating mandible movements and comprising : a bottom part (1) receiving a mandible model (8) ; and a top part which receives a maxilla model (7) and which when in its normal position determines a substantially horizontal plane, viz., the articulator plane, AND is pivoted near a rear cross-bearer (4) to an upright rear support frame (R) of the bottom part (1) and the opposite articulation which in the centring position determines a horizontal pivoting axis, viz. the articulator axis (AB), has control means for adjusting and controlling the movement paths of the top part (2) relatively to the bottom part (1), characterised in that the articulated connection comprises two pairs of interengaging centring cones (10), which determine the articulator axis (AB), and conical funnels (9), the same being secured to the top part (2) near the end of the cross-bearer (4) and opening outwards, the centring cones (10) which are disposed near the runnels (9) being disposed on lateral swing arms (5) of the bottom part (1) which are mounted on the support frame (R) for pivoting outwards around an axis normal to the articulator axis (AB) against the force of springs (12) providing A variable biasing, and the control means comprise two pins (18), which co-operate with a strip (19) and two abutments (20), and two pivot heads (13) which co-operate with three pivot path segments (14 to 16), the pins (18) being aligned at right-angles to the articulator plane and on to the articulator axis (AB) and being so disposed in a slot (22) in the top part (2) as to be slidable in the direction of the articulator axis (AB), the abutments (20) being slidable in the direction of the articulator axis (AB) in a slot (21) in the bottom part (1) and having an abutment surface adjustable in rotation around an axis parallel to the pins, the strip (19) forming a land which is disposed before the articulator axis (AB) by an amount corresponding to pin radius and which is directed rearwardly to be parallel to the articulator axis, the pivot heads (13) being in the form of rollers which are coaxial of the articulator axis (AB) and which are mounted for sliding in the bottom part (1), the three pivot path segments (14 to 16), which are effective as cams (17) adapted to the generated surface of the rollers (13) and extending in a plane normal to the articulator axis (AB), being received for individual adjustment in a holder (6) disposed on the top part (2) for axial sliding.

## Revendications

1. Articulateur pour la simulation des mouvements de la mâchoire inférieure, comprenant une base (1) recevant le modèle de mâchoire inférieure (8) et un élément supérieur (2) recevant le modèle de mâchoire supérieure (7), l'élément supérieur (2), qui détermine dans la position de base un plan, le plan de l'articulateur, à peu près horizontal, étant articulé dans la zone d'un support transversale arrière (4) à un cadre support (R) arrière se dressant de la base (1) et l'assemblage articulé réciproque, qui détermine dans la position de centrage un axe de pivotage, l'axe de l'articulateur (AB), horizontal, étant muni de moyens de réglage pour ajuster et régler les trajectoires de l'élément supérieur (2) par rapport à la base, caractérisé en ce que l'assemblage articulé est formé par une paire de cônes de centrage (10) et de trémies côniques (9) emmanchant l'un l'autre, respectivement, définissant l'axe de l'articulateur (AB), les trémies côniques (9) fixées à l'élément supérieur (2) aux extrémités du support transversal (4) s'ouvrant vers l'extérieur et les cônes de centrage (10) leur faisant face étant disposés sur des ailes (5) latérales de la base (1), lesdites ailes étant logées sur axe perpendiculaire sur l'axe de l'articulateur (AB) de façon à pouvoir basculer vers l'extérieur contre la force des ressorts (12) ajustables quant à leur prétension, et que les moyens de réglage comprennent d'une part deux tenons (18) coopérant avec un listel de réglage (19) et deux arrêts (20) et d'autre part deux têtes d'articulation (13) coopérant respectivement avec trois segments (14, 15, 16) de trajectoire, les tenons (18) perpendiculaires au plan de l'articulateur et alignés sur l'axe de l'articulateur (AB) et ajustables par glissement en direction de l'axe de l'articulateur (AB) se trouvant dans une fente (22) de l'élément supérieur (2), les arrêts (20) ajustables par glissement en direction de l'axe de l'articulateur (AB) dans une fente (21) de la base (1) ayant une surface d'arrêt ajustable par rotation autour d'un axe parallèle aux tenons, et le listel de réglage (19) formant une arrête de réglage dirigée vers l'arrière et parallèle à l'axe de l'articulateur et se trouvant à une distance égale au rayon des tenons devant l'axe de l'articulateur (AB) et les têtes d'articulation (13) étant formées par de rouleaux coaxieux à l'axe de l'articulateur (AB) ajustable par glissement en direction de l'axe dans la base (1) et les trois segments de trajectoire (14, 15, 16) formant les courbes de réglage (17) adaptés aux enveloppes des rouleaux (13) et s'étendant dans un plan normal à l'axe de l'articulateur (AB), étant chacun monté séparément ajustable dans un porte-pièce (6) disposé sur l'élément supérieur (2) ajustable par glissement en direction axiale.

Fig.2

Fig.3

Fig.1

Fig. 4

Fig. 5

Fig. 6

Fig. 7

Fig.8α

Fig.8

Bahn I - abcf
II - agcf
III - adbcf
IV - ah

EP 0 233 857 B1